# EUROPEAN PATENT APPLICATION

(11) **EP 4 414 201 A1**
(43) Date of publication of application: **14.08.2024**
(21) Application number: 24155733.9
(22) Date of filing: 05.02.2024
(51) Int. Cl.: B60K 35/231, B60K 35/28, B60K 35/29, B60K 35/81, B60J 1/02, G02B 27/01, G08G 1/16

(54) **DUAL VIEW VEHICLE DISPLAY**

(30) Priority: 06.02.2023 US 202318164804
(71) Applicant: Paccar Inc, Bellevue, WA 98004 (US)
(72) Inventor: HARBACH, Andrew Paul, Argyle, 76226 (US)
(74) Representative: Calysta NV

(57) **Abstract**

Systems and methods for providing a dual view display for a vehicle including an autonomous driving system. The autonomous driving system may monitor an environment in which the vehicle is operating, sense a condition in the environment, and determine a vehicle response to the condition including one or more automated vehicle actions. Condition-associated data including information about the sensed/perceived condition and/or the one or more corresponding automated vehicle actions to the condition may be provided to a dual view display system. The dual view display system may determine a notification corresponding to the perceived condition and/or the automated vehicle intention and cause the notification to be displayed on a transparent display. The transparent display provides an operator interface to communicate the vehicle perception/intention to the vehicle operator. The transparent display further provides an external Human-Machine Interface (eHMI) to communicate the vehicle perception/intention to other road users.

## Description

### BACKGROUND

Autonomous driving technologies are increasingly being implemented into vehicles on the road that allow the vehicles to perform partial to fully automated driving tasks/actions, such as cruise control, lane keeping, impact collision warning/avoidance, safety-critical functions, self-driving functions, etc. Among other benefits, autonomous (or semi-autonomous) vehicles may improve road safety by reducing accidents caused by human error, such as distracted or impaired driving. However, a lack of communication provided by autonomous vehicles to humans in the vehicle's operating environment may cause operators of autonomous vehicles and other road users to be concerned about the safety of autonomous vehicles and the potential for accidents or malfunction.

While relatively specific examples have been discussed, it should be understood that aspects of the present disclosure should not be limited to solving the specific examples identified in the background.

### SUMMARY

The disclosure generally relates to providing a dual view display for a vehicle according to examples. According to examples, a vehicle may include an autonomous driving system that monitors an environment in which the vehicle is operating, senses a condition in the environment, and determines a vehicle response to the condition, including one or more automated vehicle actions. The dual view display system may determine a notification corresponding to the perceived condition and/or the automated vehicle actions/intention and cause the notification to be displayed on a transparent display. The transparent display provides an operator interface to communicate the vehicle perception/intention to the vehicle operator. The transparent display further provides an external Human-Machine Interface (eHMI) to communicate the vehicle perception/intention to other road users, such as pedestrians, cyclists, and the operators of other vehicles.

According to an aspect, a method is provided, comprising: receiving data associated with a condition perceived in an operating environment of an autonomous vehicle; determining a first notification corresponding to the perceived condition; and causing the first notification to be displayed on a transparent display included in a windowed surface of the autonomous vehicle, wherein the first notification is displayed as a real image on the transparent display and is visible from within the autonomous vehicle and outside the autonomous vehicle.

According to another aspect, a dual view display system is provided, comprising: at least one processor; and a memory including instructions, which when executed by the processor, cause the system to: receive data associated with a condition perceived in an operating environment of an autonomous vehicle; determine a first notification corresponding to the perceived condition; and cause the first notification to be displayed on a transparent display included in a windowed surface of the autonomous vehicle, wherein the first notification is displayed as a real image on the transparent display and is visible from within the autonomous vehicle and outside the autonomous vehicle.

According to another aspect, an autonomous vehicle is provided, comprising: at least one processor; and a memory including instructions, which when executed by the processor, cause the autonomous vehicle to: receive sensor data from one or more sensor on the autonomous vehicle; perceive a condition based on the sensor data, wherein the condition includes another road user in an operating environment of the autonomous vehicle; determine a notification corresponding to the perceived condition; and cause the notification to be displayed on a transparent display included in a windowed surface of the autonomous vehicle, wherein the first notification is displayed as a real image on the transparent display and is visible from within the autonomous vehicle and outside the autonomous vehicle.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following figures:
**FIGURE 1** is a block diagram illustrating an operating environment in which aspects of a dual view display system may be implemented according to an example;
**FIGURES 2A** and **2B** are illustrations of a vehicle including a dual view display system and displaying a notification on a transparent display according to an example;
**FIGURES 3A-3D** are illustrations of various example notification display configurations;
**FIGURE 4** is a flow diagram illustrating processing steps of a method that can be used to providing a dual view display of a notification according to an example;
**FIGURE 5** is another flow diagram illustrating processing steps of a method that can be used to providing a dual view display of a notification according to an example; and
**FIGURE 6** is a block diagram illustrating example physical components of a computing device or system with which examples may be practiced.

### DETAILED DESCRIPTION

The following detailed description refers to the accompanying drawings. Wherever possible, the same reference numbers are used in the drawings and the following description to refer to the same or similar elements. While aspects of the present disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the present disclosure, but instead, the proper scope of the present disclosure is defined by the appended claims. The following detailed description is, therefore, not to be taken in a limiting sense.

As mentioned above, although autonomous driving technology provides various benefits, operators of autonomous vehicles and other road users may be concerned about the safety of autonomous vehicles and the potential for accidents or malfunction. In some examples, this may be due in part to reduced or eliminated communication between two humans (i.e., the vehicle operator and another road user) that would typically occur without autonomous driving technology. For instance, a human vehicle operator may typically provide visual cues (a nod, a wave, etc.) to other road users, such as vulnerable road users (VRUs), to communicate to the VRUs that the vehicle operator sees them and is waiting for them to cross. A VRU may include a pedestrian, cyclist, scooter rider, or other unprotected occupant in the vehicle's operating environment. As can be appreciated, because a VRU lacks the protection of safety devices, such as seat belts and airbags, the VRU may be particularly vulnerable in interactions with an autonomous vehicle. VRUs, vehicle operators, other road users may benefit from explicit communications of automated driving actions (e.g., perceptions and/or intentions) of an autonomous vehicle. For example, explicit communications of automated driving actions may facilitate interactions and increase a level of perceived safety and comfort in interacting with the autonomous vehicle.

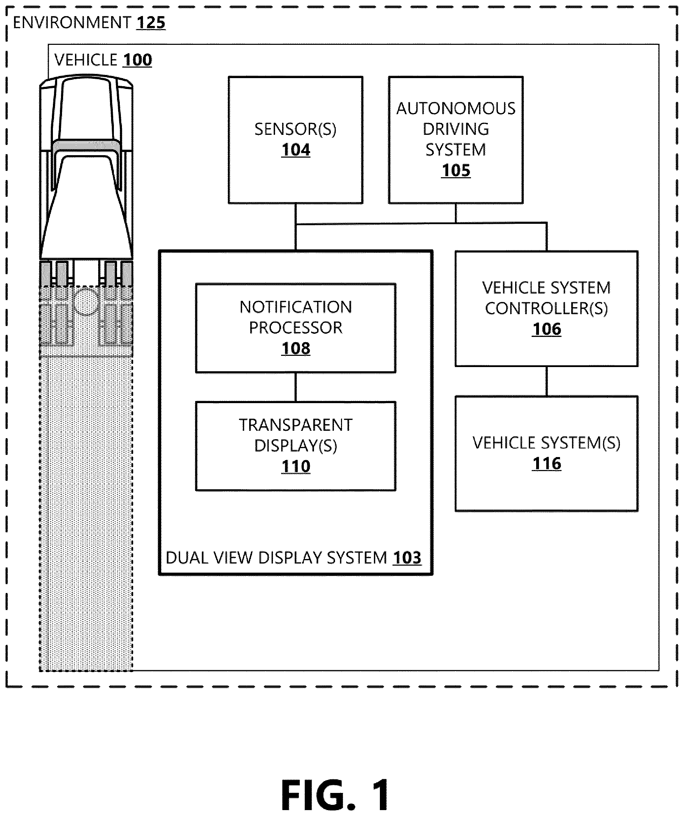

Accordingly, aspects of the present disclosure provide systems and methods for providing a dual view display for a vehicle. According to examples, condition-associated data including information about the sensed/perceived condition and/or the one or more corresponding automated vehicle actions to the condition may be received by a dual view display system. The dual view display system may determine a notification corresponding to the perceived condition and/or the automated vehicle intention and cause the notification to be displayed on a transparent display. The transparent display provides an operator interface to communicate the vehicle perception/intention to the vehicle operator. The transparent display further provides an external Human-Machine Interface (eHMI) to communicate the vehicle perception/intention to other road users. These and other examples are discussed below with reference to **FIGURES 1-6****.**

**FIGURE 1** is a block diagram illustrating an example operating environment **125** in which a dual view display system **103** may be implemented. With reference now to **FIGURE 1****,** the example operating environment **125** includes a vehicle **100.** In some examples, and as depicted in various Figures, the vehicle **100** is a truck, such as Class 8 truck. However, the methods and systems can be used by various types of vehicles of all sizes. It will be appreciated that aspects of the disclosed subject matter may also have wide application and, therefore, may be suitable for use with any type of vehicle, such as passenger vehicles, motorcycles, buses, light, medium, and heavy-duty vehicles, trains, boats, yachts, motor homes, etc. Accordingly, the following descriptions and illustrations herein should be considered illustrative in nature and, thus, not limiting the scope of the claimed subject matter.

As shown in **FIGURE 1****,** the vehicle **100** includes an autonomous driving system **105** and a dual view display system **103.** For instance, the vehicle **100** may be an autonomous vehicle having a level of automation between partial and full automation. In some examples, the dual view display system **103** and the autonomous driving system **105** are communicatively connected. In other examples, the dual view display system **103** may be included in the autonomous driving system **105** or the autonomous driving system **105** may be included in the dual view display system **103.** According to examples, the dual view display system **103** provides notifications of perceptions and/or intentions of the vehicle **100** to be displayed on a transparent display **110** included in the vehicle **100.** The autonomous driving system **105** may include one or more autonomous vehicle technologies that allow the vehicle **100** to perform one or more automated driving tasks/actions. For instance, the autonomous driving system **105** provides autonomous driving functionality to the vehicle **100.** Non-limiting examples of autonomous driving functionalities include cruise control, lane keeping, impact collision warning/avoidance, safety-critical functions, self-driving functions, etc.

According to examples, the autonomous driving system **105** includes or is communicatively connected to a plurality of sensors **104.** The sensors **104** receive sensory input about the environment **125** in which the vehicle **100** is operating. In some examples, the autonomous driving system **105** generates and maintains a map of the environment **125** based on a variety of sensor data provided by various sensors **104.** For instance, the vehicle may include one or a combination of radar sensors, video camera, lidar (light detection and ranging), ultrasonic, or other sensors that may be used to monitor one or more conditions of the operating environment **125.** Conditions of the operating environment **125** may include a detection of nearby vehicles, traffic lights, road signs, objects (e.g., other vehicles, vulnerable road users (VRUs), animals), lane markings, road edges, curbs, etc. A VRU may include a pedestrian, cyclist, scooter rider, or other unprotected occupant in the vehicle's operating environment **125.** The sensors **104** may be connected to the vehicle **100** in one or more desired sensing locations. As can be appreciated, the location, type, and number of sensors **104** that are used may depend upon a particular application and can be modified as conditions dictate. For instance, various external sensors **104** may be placed around a vehicle **100** to form a sensing area (e.g., a forward sensing zone, side sensing zones, and a rear sensing zone). The vehicle **100** may further include various other vehicle sensors, such as brake sensors, a throttle sensor, a suspension sensor, tire pressure sensors, vehicle inertial sensor(s), a wheel speed sensor, a vehicle speed sensor, a seat belt sensor, temperature sensors, accelerometers, a steering angle sensor, driver monitoring sensors, moisture sensors, etc. The above sensors **104** may be used individually or in conjunction with each other.

In some examples, the autonomous driving system **105** processes sensor data to monitor the operating environment **125,** perceive condition(s) of the environment **125,** and determine one or more automated driving tasks/actions to perform based on the condition(s). In some examples, the autonomous driving system **105** uses rules, obstacle avoidance algorithms, predictive modeling, object recognition, and other technologies to perceive conditions and to determine a corresponding automated driving tasks/action(s) to perform. The autonomous driving system **105** may be configured to follow traffic rules and navigate objects and other obstacles. Example automated driving tasks/action(s) may include one or a combination of brake control, throttle control, steering control, suspension control, transmission control, other chassis control, drive state control, lighting and horn control, etc. According to examples, the autonomous driving system **105** may output control signals or other instructions to one or more vehicle system controllers **106** to cause one or more vehicle systems **116** to perform the determined automated driving action(s). The term "vehicle intention" is used herein to describe one or more automated driving action(s) the vehicle **100** determines to perform or performs. In some examples, the vehicle intention is in response to a perceived condition. For instance, the vehicle **100** may automatically brake/stop based on perceiving a VRU, such as a pedestrian, on the road or in the vehicle's current path. As another example, the vehicle **100** may steer into a parking space based on perceiving an available parking space.

In some implementations, the autonomous driving system **105** may output data associated with a perceived condition (herein referred to as "condition-associated data") to the dual view display system **103.** For example, the dual view display system **103** may receive condition-associated data including signals or other instructions associated with a perceived condition (e.g., the VRU detection, the available parking space) and/or the corresponding vehicle intention (e.g., braking/stopping for the pedestrian, turning into the available parking space). According to an example implementation, the dual view display system **103** may include a notification processor **108** and one or more transparent displays **110.** For instance, the notification processor **108** may process the received condition-associated data and determine a notification corresponding to the condition to communicate to the operator of the vehicle **100** and to another road user in the environment **125** via a transparent display **110.**

In some examples, each of the one or more transparent display(s) **110** may comprise or be included in a windowed surface (e.g., windshield, side windows, back window) of the vehicle **100** using one of various transparent display technologies. The transparent display(s) **110** may be mounted onto or integrated into a vehicle window or sections thereof. According to examples, the transparent display **110** provides an interface between the vehicle **100** and other road users, where a notification may be displayed on the transparent display **110** as a real image (e.g., viewable from inside and outside the vehicle **100**). In one example, the transparent display **110** includes an OLED (organic lightemitting diode) transparent display or an LCD (liquid crystal display) transparent display. In another example, the transparent display **110** uses a projection display technology, such as LCD technology, DLP (digital light processing) technology, LCoS (liquid crystal on silicon) technology, UV laser film excitation technology, HOE (Hologram Optical Element) technology, etc. Other types of transparent display **110** technologies that allow for a background of the display to be transparent when displaying a notification are possible and are within the scope of the present disclosure.

According to examples, the dual view display system **103** uses the transparent display **110** as an external human-machine interface (eHMI) to communicate externally to other road users. Additionally, the dual view display system **103** uses the transparent display **110** as an operator interface to display the notification and other information such as speed, navigation, autonomous driving status, etc., without requiring the operator to take their eyes off the road or task at hand. For instance, the notification may include text and/or symbols and provide an explicit communication of the perceived condition and/or the corresponding action of the vehicle **100.** Accordingly, both the operator of the vehicle **100** and other road users may be informed about perceptions/intentions of the vehicle **100,** which may increase a level of perceived safety and comfort in interacting with the (autonomous) vehicle **100,** where communication between two humans (i.e., the vehicle operator and another road user) may be reduced or non-existent. In some examples, the dual view display system **103** may also use another type of display technology to display the notification, such external vehicle projection display technology to project the notification onto the road surface.

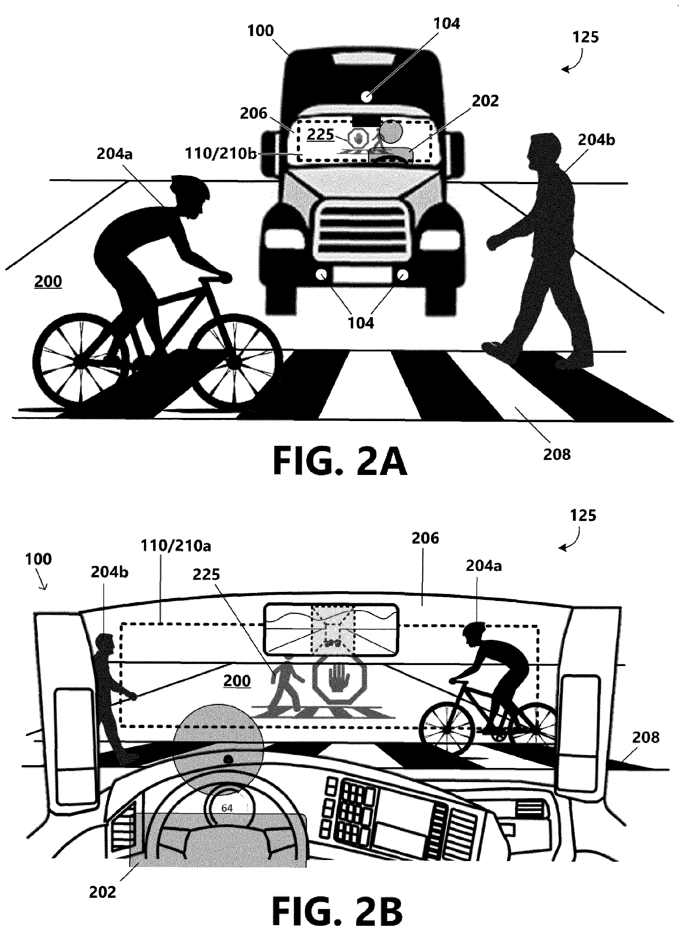

In some examples, the notification processor **108** processes received condition-associated data to determine whether a perceived condition includes detection of a VRU. As mentioned previously, a VRU may not be safely guarded by a vehicle structure and may lack the protection of safety devices such as seat belts and airbags. Thus, VRUs in the operating environment **125** may be particularly vulnerable to actions of the vehicle **100** and may benefit from explicit communication from the vehicle **100** of its perceptions and/or intentions. In some examples, when a determination is made that a perceived condition includes detection of a VRU, the notification processor **108** may generate a notification including text and/or symbols to notify the VRU that the VRU has been perceived. In other examples, the notification informs the VRU of an action the vehicle is taking in response to the perceived VRU. In some examples, the notification that is generated and displayed upon detection of a VRU may be different from the notification that is generated and displayed in other instances (such as when another road user, such as a vehicle, is detected). As can be appreciated, the operator of the vehicle **100** may also benefit from being explicitly informed about perceptions/intentions of the vehicle **100** to increase the operator's level of perceived safety and comfort in operating the (autonomous) vehicle **100,** particularly in close proximity to a VRU. Additional details of the dual view display system **103** and notifications provided by the dual view display system **103** are described below with reference to **FIGURES 2-6****.**

**FIGURES 2A** and **2B** depict an example vehicle **100** including an autonomous driving system **105** and a dual view display system **103,** where the dual view display system **103** is providing a notification via a transparent display **110.** In some examples and as illustrated in **FIGURES 2A** and **2B****,** the transparent display **110** is included in a front windshield **206** of the vehicle **100.** In other examples, the transparent display **110** may be included in a different and/or additional windowed surface. Although the vehicle **100** in **FIGURES 2A** and **2B** is depicted with a rearview mirror (e.g., a reflective mirror, a digital mirror, or a reflective and digital mirror), in other examples, the vehicle **100** may not include a rearview mirror. **FIGURE 2A** depicts a perspective from outside the vehicle **100** (e.g., as may be seen by another road user **204a** and **204b,** collectively, "other road users **204**"). For instance, the transparent display **110** may be viewed by other road users **204** and may operate as an eHMI **210b** for the vehicle **100** to communicate notifications **225** externally to other road users **204.** In the examples shown, the other road users **204** are VRUs (e.g., a cyclist (**204a**) and a pedestrian (**204b**))**.** However, in other examples, the other road users **204** may include operators of other vehicles and/or other autonomous vehicles or other users of/near the road). **FIGURE 2B** depicts a perspective from inside the vehicle **100** (e.g., as may be seen by an operator **202** of the vehicle **100**). For instance, the transparent display **110** may be viewed by the vehicle operator **202** and may operate as an operator interface **210a,** such as a heads-up display (HUD), to communicate notifications **225** and other information at or near the operator's line of sight.

According to examples, the autonomous driving system **105** included in the vehicle **100** may receive sensor data from various sensors **104** and monitor the operating environment **125** of the vehicle **100.** For example, the autonomous driving system **105** may perceive the road **200,** other road users **204,** road markings **208** (e.g., crosswalk), and other objects and determine a corresponding automated driving action(s) to perform. For instance, the autonomous driving system **105** may determine for the vehicle **100** to stop until the vehicle **100** can safely proceed. According to examples, the dual view display system **103** may receive condition-associated data from the autonomous driving system **105** including information about the perceived conditions and/or the determined vehicle intentions. The dual view display system **103** may determine, based on the received condition-associated data, an appropriate notification **225.** For instance, the dual view display system **103** may determine a message to communicate to the vehicle operator **202** and to the other road users **204** based on receiving data indicating a VRU on the road **200** and/or indicating the vehicle **100** is stopping for the VRU. As depicted in **FIGURES 2A** and **2B****,** the message determined for the notification **225** includes symbols indicating the perception of a VRU and the intention of the vehicle **100** to stop. In other examples, the notification **225** may additionally or alternatively include text. In some examples, the displayed notification **225** may be presented in association with an audible notification and/or other visual cues (e.g., flashing lights).

In some examples, the dual view display system **103** may determine a first notification **225** to communicate to other road users **204** and a second notification **225** to communicate to the vehicle operator **202.** According to one example, the first notification **225** and the second notification **225** are displayed at a same time on different locations on the transparent display **110.** For example, if the notification includes text, the first notification **225** may be oriented on the transparent display **110** to for the road users **204** to be able to read, while the second notification **225** may be oriented (e.g., in a different location) for the vehicle operator **202** to read. According to another example, the first notification **225** and the second notification **225** are displayed intermittently.

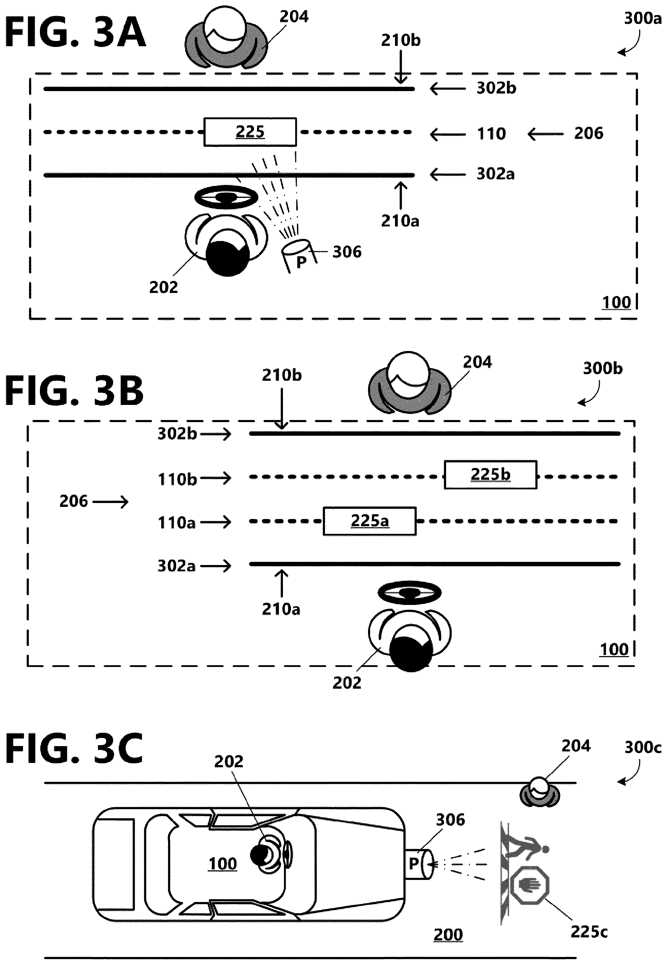

**FIGURES 3A-3D** include illustrations of various example notification display configurations **300a-300d.** For instance, as shown in **FIGURE 3A****,** a first example display configuration **300a** includes a windshield **206** comprising the transparent display **110** attached to a glass/window surface **302** or disposed between two layers of glass surfaces **302a** and **302b** (collectively, glass surface **302**). For instance, the notification **225** may be projected onto (e.g., by a projector **306**) or otherwise displayed a transparent screen, film, or projection display technology included in the transparent display **110.** The notification **225** may appear on the glass surface **302** or may appear to be floating at a distance past or in front of the glass surface **302.** This may allow the vehicle operator **202** to see the notification **225** while keeping their eyes on the road **200** and may additionally allow another road user **204** to see the notification **225** while encountering an autonomous action of the vehicle **100.** In some examples, a plurality of notifications **225** may be displayed on the transparent display **110.**

According to another example, and with reference now to **FIGURE 3B****,** a second example display configuration **300b** is shown. The second example display configuration **300b** includes a windshield **206** with two transparent displays **110a** and **110b** attached to a glass/window surface **302** or disposed between two layers of glass surfaces **302a** and **302b** (collectively, glass surface **302**). For instance, a first notification **225a** may be projected onto (e.g., by a projector **306**) or otherwise displayed on a first transparent display **110a** and a second notification **225b** may be displayed on a second transparent display **110b.** In such examples, the first transparent display **110a** may operate as an operator interface **210a** and the second transparent display **110b** may operate as an eHMI **210b.** In some examples, a pattern may be displayed on the second transparent display **110b** in line with the first notification **225a,** such that the first notification **225a** may be obfuscated from other road users **204.** In some examples, a pattern may be displayed on the first transparent display **110a** in line with the second notification **225b,** such that the second notification **225b** may be obfuscated from the vehicle operator **202.**

According to another example, and with reference now to **FIGURE 3C****,** a third example display configuration **300c** is shown. In the third example display configuration **300c,** a third notification **225c** is projected (e.g., by a projector **306)** onto the road **200** for display to the vehicle operator **202** and other road users **204.** For instance, the third notification **225c** may be provided in addition to one or more notifications **225** displayed on a transparent display **110.**

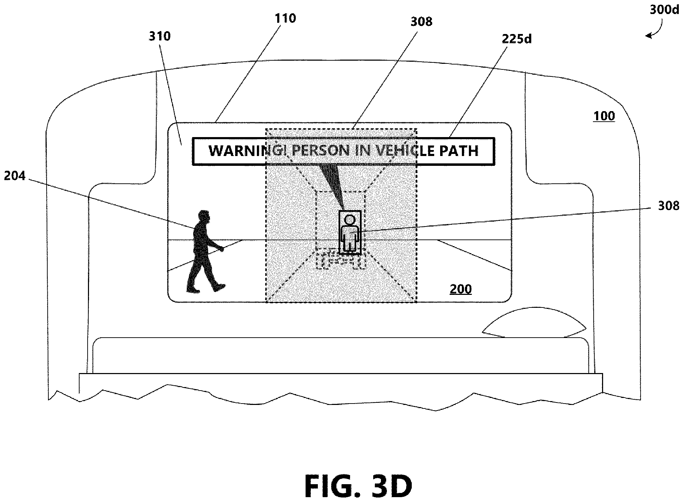

According to another example, and with reference now to **FIGURE 3D****,** a fourth example display configuration **300d** is shown. In the fourth example display configuration **300d,** a transparent display **110** is integrated into a rear window of the vehicle **100.** According to an example, the dual view display system **103** may generate and display an augmented reality environment **310** on the transparent display **110** including a combination of a scene captured by at least one camera and one or more virtual design elements **308.** For instance, the augmented reality environment **310** may be generated and displayed using examples described in U.S. Patent No. 10,373,378 titled "Augmented Reality System for Vehicle Blind Spot Prevention" filed on June 26^{th}, 2015, and U.S. Patent No. 10,909,765 titled "Augmented Reality System for Vehicle Blind Spot Prevention" filed on June 28th, 2019, the disclosures of which are incorporated by reference herein in their entireties. In examples, the vehicle operator **202** may be able to view the camera-captured scene as a view augmented by information captured by the one or more cameras, which may allow the operator to view other road users **204** that are not viewable through the transparent display **110** (e.g., other road users **204** who may be behind a trailer of a tractor-trailer vehicle **100**). In one embodiment, the virtual design elements **308** are rendered based on the vehicle operator's viewpoint. As depicted in **FIGURE 3D****,** the virtual design elements **308** may include, for example, a general outline of an occluding structure, such as a portion of the vehicle **100** (e.g., a trailer of a tractor-trailer vehicle **100**) and objects that may be occluded thereby. The virtual design elements **308** may allow the vehicle operator **202** to "see through" the occluding structures, such as the trailer, in order to increase operator visibility, etc. For example, a first VRU may be behind the vehicle **100** and occluded by a vehicle structure. Thus, a virtual design element **308** included in the augmented reality environment **310** may include the first VRU. Additionally, the dual view display system **103** may generate a notification **225d** corresponding to the first VRU and include the notification **225d** in the augmented reality environment **310.** As depicted, the notification **225d** may include information about the perception of the first VRU. For instance, the notification **225d** may be presented on the transparent display **110** to the vehicle operator **202** and to a second VRU (e.g., other road user **204**) and any other road users **204** who may have sight of the transparent display **110.** In some examples, sensor data may indicate a detected VRU is in a position where the transparent display **110** may not be visible to the detected VRU. In such cases, the dual view display system **103** may present the notification **225** for display via another display configuration, such as the third example display configuration **300c** or another type of notification display.

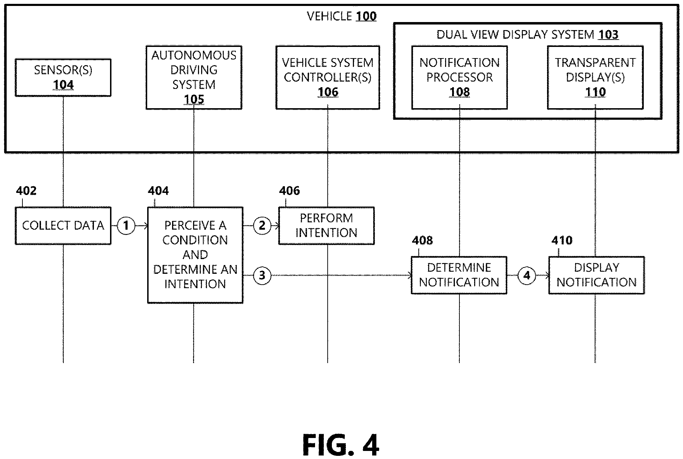

With reference now to **FIGURE 4****,** a flow diagram is provided illustrating example processing steps of a method **400** that can be used to provide a dual view display of a notification **225** according to an example. For instance, at operation **402,** sensor data may be collected by various sensors **104** included in the vehicle **100.** The sensor data may include various sensory inputs about the environment **125** in which the vehicle **100** is operating. For instance, the sensors **104** may include one or a combination of radar sensors, video camera, lidar, and ultrasonic sensors that may collect sensor data and provide the sensor data to the autonomous driving system **105.** Circled numeral "1" represents sensor data being transmitted to the autonomous driving system **105.**

At operation **404,** the autonomous driving system **105** may process the received sensor data to monitor one or more conditions of the operating environment **125.** For instance, the autonomous driving system **105** may perceive one or more conditions in the operating environment **125,** such as a detection of nearby vehicles, traffic lights, road signs, objects, other road users **204** (e.g., other vehicles, VRUs), lane markings, road edges, curbs, etc. In some examples, the autonomous driving system **105** may determine a corresponding automated driving action(s) to perform based on the perceived condition. As represented by circled numeral "2", the autonomous driving system **105** may communicate signals or other instructions associated with a perceived condition and/or the corresponding vehicle intention to one or more vehicle controllers **106.** For instance, the one or more vehicle controllers **106** may control one or more vehicle systems **116** to execute the determined automated driving action(s) (e.g., control braking, throttle, steering, suspension, transmission, other chassis control, drive state) and cause the vehicle **100** to respond to the perceived conditions in the operating environment **125.**

Additionally, and as represented by circled numeral "3", the autonomous driving system **105** may communicate condition-associated data including signals or other instructions associated with a perceived condition and/or the corresponding vehicle intention to the dual view display system **103.** In some examples, at operation **408,** the dual view display system **103** may determine whether to generate a notification **225** based on the received condition-associated data. For instance, the notification processor **108** of the dual view display system **103** may determine whether to generate/display a notification **225** based on the type of condition (or combination of multiple conditions) perceived by the autonomous driving system **105** and/or the type of action performed by the vehicle **100** in response to the perceived condition. In other examples, the dual view display system **103** may determine a message for the notification **225.** For instance, the message may be intended for the vehicle operator **202** and/or another road user **204.** In some examples, the dual view display system **103** may further determine a location/area on the transparent display **110** to display the notification **225.** As represented by circled numeral "4", the notification processor **108** may communicate signals or other instructions associated with determined notification **225** to a transparent display **110** included in the vehicle **100.** For instance, the notification **225** may be visible to the vehicle operator **202** inside the vehicle **100** and visible to another road user **204** in the environment **125** outside the vehicle **100.**

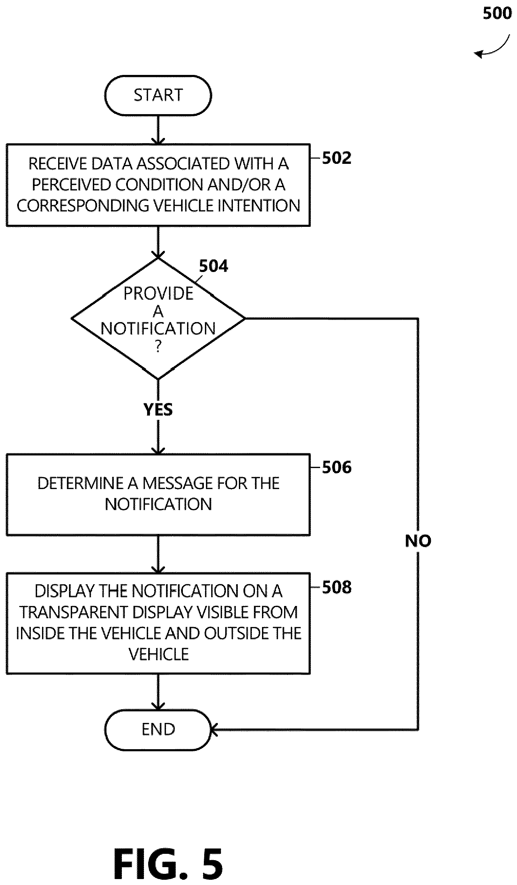

**FIGURE 5** is a flow diagram illustrating example processing steps of a method **500** that can be used to provide a dual view display of a notification **225** according to an example. For instance, the processing steps may be performed by components of the dual view display system **103.** At operation **502,** the dual view display system **103** may receive condition-associated data from the autonomous driving system **105** of a vehicle **100.** For instance, the condition-associated data may include signals or other instructions associated with a condition perceived by the autonomous driving system **105** and/or one or more automated driving actions determined by the autonomous driving system **105** to be performed in response to the perceived condition.

At decision operation **504,** a determination may be made by the dual view display system **103** about whether to provide a notification **225** associated with the received condition-associated data. In some examples, the determination may be based on the type of condition perceived. For instance, the dual view display system **103** may process received condition-associated data and determine a type of condition that is perceived in the environment **125** and/or a type of vehicle intention that is determined for the vehicle **100** to perform in response to the perceived condition. In some examples, the dual view display system **103** may determine whether the type of perceived condition/vehicle intention satisfies one or more rules corresponding to providing explicit communication of a message corresponding to the perceived condition/vehicle intention. As an example, the dual view display system **103** may be configured to provide a notification **225** when the perceived condition includes another road user **204** and where the vehicle intention includes braking or steering to avoid a collision with the other road user **204.** As another example, the dual view display system **103** may determine to provide a notification **225** when the when the perceived condition includes a VRU. As another example, the dual view display system **103** may not provide a notification **225** when the perceived condition does not include another road user **204,** such as when the vehicle **100** is self-steering to avoid a curb.

When a determination is made to provide a notification **225,** at operation **506,** a message for the notification **225** may be determined. In some examples, the message may include information corresponding to the perceived condition. In some examples, the message may be one of a plurality of stored messages from which the dual view display system **103** may select a message for the notification **225.** For instance, the message may include information about a detected VRU, where the notification **225** may include text or symbols representing the detected VRU. In some examples, the message may additionally or alternatively include information corresponding to the vehicle's intention. For instance, the message may include information about an intention of the vehicle **100** to stop for the detected VRU, where the notification **225** may include text or symbols representing the vehicle's intention to stop.

At operation **508,** the notification **225** with the determined message may be displayed on one or more transparent displays **110** included in the vehicle **100.** For instance, the notification **225** may be displayed such that it is visible from inside the vehicle **100** to the operator **202** of the vehicle **100** and further visible from outside the vehicle **100** to other road users **204** in the operating environment **125.** For example, the notification **225** may be an explicit communication of the perceptions/intentions of the vehicle **100.** Such explicit communication of the vehicle's perceptions/intentions may help the vehicle operator **202** and other road users **204** to better understand and, thus, increase their trust in interacting with the (autonomous) vehicle **100.**

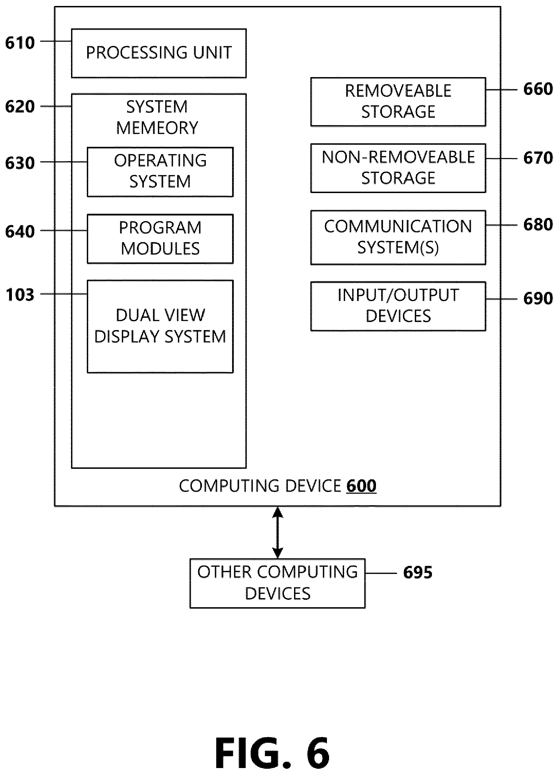

**FIGURE 6** is a system diagram of a computing device **600** according to an example. As shown in **FIGURE 6****,** the physical components (e.g., hardware) of the computing device **600** are illustrated and these physical components may be used to practice the various aspects of the present disclosure.

The computing device **600** may include at least one processing unit **610** and a system memory **620.** The system memory **620** may include, but is not limited to, volatile storage (e.g., random access memory), non-volatile storage (e.g., read-only memory), flash memory, or any combination of such memories. The system memory **620** may also include an operating system **630** that controls the operation of the computing device **600** and one or more program modules **640.** The program modules **640** may be responsible for performing one more of the operations of the methods described above for providing robust network connectivity. A number of different program modules and data files may be stored in the system memory **620.** While executing on the processing unit **610,** the program modules **640** may perform the various processes described above. One example program module **640** includes sufficient computer-executable instructions for the dual view display system **103.**

The computing device **600** may also have additional features or functionality. For example, the computing device **600** may include additional data storage devices (e.g., removable and/or non-removable storage devices) such as, for example, magnetic disks, optical disks, or tape. These additional storage devices are labeled as a removable storage **660** and a non-removable storage **670.**

Examples of the disclosure may also be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in **FIGURE 6** may be integrated onto a single integrated circuit. Such a SOC device may include one or more processing units, graphics units, communications units, system virtualization units and various application functionality all of which are integrated (or "burned") onto the chip substrate as a single integrated circuit.

When operating via a SOC, the functionality, described herein, may be operated via application-specific logic integrated with other components of the computing device **600** on the single integrated circuit (chip). The disclosure may also be practiced using other technologies capable of performing logical operations such as, for example, AND, OR, and NOT, including but not limited to mechanical, optical, fluidic, and quantum technologies.

The computing device **600** may include one or more communication systems **680** that enable the computing device **600** to communicate with other computing devices **695** such as, for example, routing engines, gateways, signings systems and the like. Examples of communication systems **680** include, but are not limited to, wireless communications, wired communications, cellular communications, radio frequency (RF) transmitter, receiver, and/or transceiver circuitry, a Controller Area Network (CAN) bus, a universal serial bus (USB), parallel, serial ports, etc.

The computing device **600** may also have one or more input devices and/or one or more output devices shown as input/output devices **690.** These input/output devices **690** may include a keyboard, a sound or voice input device, haptic devices, a touch, force and/or swipe input device, a display, speakers, etc. The aforementioned devices are examples and others may be used.

The term computer-readable media as used herein may include computer storage media. Computer storage media may include volatile and nonvolatile, removable and non-removable media implemented in any method or technology for storage of information, such as computer readable instructions, data structures, or program modules.

The system memory **620,** the removable storage **660,** and the non-removable storage **670** are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by the computing device **600.** Any such computer storage media may be part of the computing device **600.** Computer storage media does not include a carrier wave or other propagated or modulated data signal.

Programming modules may include routines, programs, components, data structures, and other types of structures that may perform particular tasks or that may implement particular abstract data types. Moreover, aspects may be practiced with other computer system configurations, including hand-held devices, multiprocessor systems, microprocessor-based or programmable user electronics, minicomputers, mainframe computers, and the like. Aspects may also be practiced in distributed computing environments where tasks are performed by remote processing devices that are linked through a communications network. In a distributed computing environment, programming modules may be located in both local and remote memory storage devices.

Aspects may be implemented as a computer process (method), a computing system, or as an article of manufacture, such as a computer program product or computer-readable storage medium. The computer program product may be a computer storage medium readable by a computer system and encoding a computer program of instructions for executing a computer process. Accordingly, hardware or software (including firmware, resident software, micro-code, etc.) may provide aspects discussed herein. Aspects may take the form of a computer program product on a computer-usable or computer-readable storage medium having computer-usable or computer-readable program code embodied in the medium for use by, or in connection with, an instruction execution system.

The description and illustration of one or more aspects provided in this application are intended to provide a thorough and complete disclosure of the full scope of the subject matter to those skilled in the art and are not intended to limit or restrict the scope of the invention as claimed in any way. The aspects, examples, and details provided in this application are considered sufficient to convey possession and enable those skilled in the art to practice the best mode of the claimed invention. Descriptions of structures, resources, operations, and acts considered well-known to those skilled in the art may be brief or omitted to avoid obscuring lesser known or unique aspects of the subject matter of this application. The claimed invention should not be construed as being limited to any embodiment, aspects, example, or detail provided in this application unless expressly stated herein. Regardless of whether shown or described collectively or separately, the various features (both structural and methodological) are intended to be selectively included or omitted to produce an embodiment with a particular set of features. Further, any or all of the functions and acts shown or described may be performed in any order or concurrently. Having been provided with the description and illustration of the present application, one skilled in the art may envision variations, modifications, and alternate embodiments falling within the spirit of the broader aspects of the general inventive concept provided in this application that do not depart from the broader scope of the present disclosure.

Embodiments and/or examples of the invention can be described by one or more of the following clauses:
1. A method, comprising:
   receiving data associated with a condition perceived in an operating environment of an autonomous vehicle;
   determining a first notification corresponding to the perceived condition; and
   causing the first notification to be displayed on a transparent display included in a windowed surface of the autonomous vehicle, wherein the first notification is displayed as a real image on the transparent display and is visible from within the autonomous vehicle and outside the autonomous vehicle.
2. The method of clause 1, wherein receiving data associated with the perceived condition comprises at least one of:
   receiving data associated with an object perceived in the operating environment; and
   receiving data associated with a vehicle intention including one or more automated driving actions to be performed by the autonomous vehicle responsive to perception of the object.
3. The method of clause 1 and/or clause 2, wherein the object includes a vulnerable road user.
4. The method of one of the preceding clauses, e.g. clause 2, wherein the first notification includes an explicit communication of at least one of:
   the perceived condition; and
   the vehicle intention.
5. The method of one of the preceding clauses, comprising:
   determining a first message including text; and
   displaying the first message in an orientation readable from outside the autonomous vehicle.
6. The method of one of the preceding clauses, comprising:
   determining a second message including text; and
   displaying the second message in an orientation readable from inside the autonomous vehicle.
7. The method of one of the preceding clauses, wherein causing the first notification to be displayed on the transparent display comprises causing one or a combination of text and symbols to be displayed in an augmented reality environment on the transparent display.
8. The method of one of the preceding clauses, further comprising:
   determining a second notification corresponding to the perceived condition; and
   causing the second notification to be displayed on the transparent display, wherein the second notification is displayed as a real image on the transparent display and is visible from within the vehicle and outside the autonomous vehicle; or
   causing the second notification to be projected outside the autonomous vehicle onto a road surface in the operating environment.
9. A dual view display system, comprising:
   at least one processor; and
   a memory including instructions, which when executed by the processor, cause the system to:
      receive data associated with a condition perceived in an operating environment of an autonomous vehicle;
      determine a first notification corresponding to the perceived condition; and
      cause the first notification to be displayed on a transparent display included in a windowed surface of the autonomous vehicle, wherein the first notification is displayed as a real image on the transparent display and is visible from within the autonomous vehicle and outside the autonomous vehicle.
10. The dual view display system of clause 9, wherein the data associated with the perceived condition comprises at least one of:
   data associated with an object perceived in the operating environment; and
   data associated with a vehicle intention including one or more automated driving actions to be performed by the autonomous vehicle responsive to perception of the object.
11. The dual view display system of clause 9 and/or clause 10, wherein the one or more automated driving actions include at least one of:
   brake control;
   throttle control;
   steering control;
   suspension control;
   transmission control; and
   drive state control.
12. The dual view display system of one of the preceding clauses 9-11, e.g. clause 10, wherein the object includes another road user in the operating environment outside the autonomous vehicle.
13. The dual view display system of one of the preceding clauses 9-12, e.g. clause 12, wherein the other road user includes a vulnerable road user.
14. The dual view display system of one of the preceding clauses 9-13, wherein the first notification includes at least one of:
   a first message including text displayed in an orientation readable from outside the autonomous vehicle; and
   a second message including text displayed in an orientation readable from inside the autonomous vehicle.
15. The dual view display system of one of the preceding clauses 9-14, e.g. clause 14, wherein the first and second messages are a same message.
16. The dual view display system of one of the preceding clauses 9-15, wherein the first notification comprises one or a combination of text and symbols.
17. The dual view display system of one of the preceding clauses 9-16, wherein in causing the first notification to be displayed on the transparent display, the system displays the first notification in an augmented reality environment on the transparent display.
18. The dual view display system of one of the preceding clauses 9-17, wherein the instructions further cause the system to:
   determine a second notification corresponding to the perceived condition; and
   cause the second notification to be displayed on the transparent display, wherein the second notification is displayed as a real image on the transparent display and is visible from within the vehicle and outside the autonomous vehicle; or
   cause the second notification to be projected outside the autonomous vehicle onto a road surface in the operating environment.
19. An autonomous vehicle, comprising:
   at least one processor; and
   a memory including instructions, which when executed by the processor, cause the autonomous vehicle to:
      receive sensor data from one or more sensor on the autonomous vehicle;
      perceive a condition based on the sensor data, wherein the condition includes another road user in an operating environment of the autonomous vehicle;
      determine a notification corresponding to the perceived condition; and
      cause the notification to be displayed on a transparent display included in a windowed surface of the autonomous vehicle, wherein the first notification is displayed as a real image on the transparent display and is visible from within the autonomous vehicle and outside the autonomous vehicle.
20. The autonomous vehicle of clause 19, wherein:
   the instructions further cause the autonomous vehicle to determine one or more actions to be performed by the autonomous vehicle responsive to perception of the other road user; and
   the notification includes an explicit communication of at least one of:
      the perceived other road user; and
      the vehicle intention.

## Claims

1. A method, comprising:
receiving data associated with a condition perceived in an operating environment of an autonomous vehicle;
determining a first notification corresponding to the perceived condition; and
causing the first notification to be displayed on a transparent display included in a windowed surface of the autonomous vehicle, wherein the first notification is displayed as a real image on the transparent display and is visible from within the autonomous vehicle and outside the autonomous vehicle.

2. The method of claim 1, wherein receiving data associated with the perceived condition comprises at least one of:
receiving data associated with an object perceived in the operating environment; and
receiving data associated with a vehicle intention including one or more automated driving actions to be performed by the autonomous vehicle responsive to perception of the object.

3. The method of claim 1 or claim 2, wherein the transparent display is disposed between two layers of glass surfaces.

4. The method of any of the preceding claims, wherein causing the first notification to be displayed on the transparent display comprises causing one or a combination of text and symbols to be displayed in an augmented reality environment on the transparent display.

5. The method of any of the preceding claims, further comprising:
determining a second notification corresponding to the perceived condition; and
causing the second notification to be displayed on the transparent display, wherein the second notification is displayed as a real image on the transparent display and is visible from within the vehicle and outside the autonomous vehicle; or
causing the second notification to be projected outside the autonomous vehicle onto a road surface in the operating environment.

6. A dual view display system, comprising:
at least one processor; and
a memory including instructions, which when executed by the processor, cause the system to:
receive data associated with a condition perceived in an operating environment of an autonomous vehicle;
determine a first notification corresponding to the perceived condition; and
cause the first notification to be displayed on a transparent display included in a windowed surface of the autonomous vehicle, wherein the first notification is displayed as a real image on the transparent display and is visible from within the autonomous vehicle and outside the autonomous vehicle.

7. The dual view display system of claim 6, wherein the data associated with the perceived condition comprises at least one of:
data associated with an object perceived in the operating environment; and
data associated with a vehicle intention including one or more automated driving actions to be performed by the autonomous vehicle responsive to perception of the object.

8. The dual view display system of claim 7, wherein the one or more automated driving actions include at least one of:
brake control;
throttle control;
steering control;
suspension control;
transmission control; and
drive state control.

9. The dual view display system of claim 7, wherein the object includes another road user in the operating environment outside the autonomous vehicle.

10. The dual view display system of claim 9, wherein the other road user includes a vulnerable road user.

11. The dual view display system of any of the preceding claims 6-10, wherein the transparent display is disposed between two layers of glass surfaces.

12. The dual view display system of any of the preceding claims 6-11, wherein in causing the first notification to be displayed on the transparent display, the system displays the first notification in an augmented reality environment on the transparent display.

13. The dual view display system of any of the preceding claims 6-12, wherein the instructions further cause the system to:
determine a second notification corresponding to the perceived condition; and
cause the second notification to be displayed on the transparent display, wherein the second notification is displayed as a real image on the transparent display and is visible from within the vehicle and outside the autonomous vehicle; or
cause the second notification to be projected outside the autonomous vehicle onto a road surface in the operating environment.

14. An autonomous vehicle, comprising:
at least one processor; and
a memory including instructions, which when executed by the processor, cause the autonomous vehicle to:
receive sensor data from one or more sensor on the autonomous vehicle;
perceive a condition based on the sensor data, wherein the condition includes another road user in an operating environment of the autonomous vehicle;
determine a notification corresponding to the perceived condition; and
cause the notification to be displayed on a transparent display included in a windowed surface of the autonomous vehicle, wherein the first notification is displayed as a real image on the transparent display and is visible from within the autonomous vehicle and outside the autonomous vehicle.

15. The autonomous vehicle of claim 14, further comprising:
wherein the windowed surface comprises a windshield comprising two layers of glass surfaces; and
wherein the transparent display is disposed between the two layers.
